# FASCICULE DE BREVET EUROPEEN

(11) **EP 2 130 767 B1**
(45) Date de publication et mention de la délivrance du brevet: **21.08.2013**
(21) Numéro de dépôt: 09162008.8
(22) Date de dépôt: 05.06.2009
(51) Int. Cl.: B64G 1/28, B64G 1/64, G01C 19/26, B64G 1/22, B64G 1/66

(54) **Dispositif de maintien d'au moins un objet mobile, réutilisable, sécurisé autonome et sans chocs, pour engins spatiaux**
Haltevorrichtung für mindestens ein mobiles, wieder verwendbares, selbständig und schockfrei gesichertes Objekt für Raumflugkörper
Device for supporting at least one mobile object, reusable, secured independently and shockless, for spacecraft

(30) Priorité: 06.06.2008 FR 0803166
(43) Date de publication de la demande: 09.12.2009
(73) Titulaire: THALES, 92200 Neuilly-sur-Seine (FR)
(72) Inventeur: Baudasse, Yannick, 06130 Grasse (FR)
(74) Mandataire: Esselin, Sophie

(56) Documents cités:
- EP-A- 0 614 807
- EP-A- 0 729 885
- US-A1- 2005 061 920

## Description

La présente invention se rapporte à un dispositif de maintien réutilisable sécurisé d'au moins un objet pendant au moins une phase opérationnelle d'utilisation de cet (ces) objet(s).

Certains équipements que l'on dispose à bord de satellites et engins spatiaux sont fragiles (par exemple des instruments tels que des instruments d'optiques, gyroscopes, des antennes déployables, ...) et risquent d'être endommagés lors du lancement au cours duquel les satellites sont soumis à des chocs ou de très fortes accélérations.

Pour éviter de tels endommagements, on met généralement en oeuvre des systèmes dits de gerbage, immobilisant ces équipements contre une surface fonctionnelle solidement fixée à la structure du satellite. Certaines configurations d'aménagement à l'intérieur des satellites interdisent ou rendent complexe l'accessibilité des systèmes de gerbage (par exemple après des essais « sol »). Cette accessibilité est nécessaire, car la plupart des mécanismes actuels de gerbage utilisent soit des composants fusibles, soit des éléments rétractables (ou reconditionnables et nécessitant une intervention). De ce fait, une fois dé-gerbés, ces systèmes ne permettent pas un reconditionnement automatique pour une utilisation future. De plus, de nombreux instruments à gerber, ou des sous-ensembles environnants, sont souvent sensibles aux chocs produits par les composants pyrotechniques de dé-gerbage.

Actuellement, les systèmes proposés de libération des liens de gerbage comportent essentiellement sur des systèmes basés sur la mise en tension (traction) d'un tirant. La libération du tirant provoque la séparation de l'objet à gerber de la surface fonctionnelle. Le reconditionnement de ce type de gerbage, en vue d'une réutilisation au cours du même vol, impose une intervention humaine.

On connait d'après le document EP-A-0 614 807 un dispositif de gerbage comportant un dispositif de gerbage qui n'est pas dissociable du dispositif qu'il sécurise et auquel il est intégré, ce dispositif n'étant pas adaptable au gerbage d'instruments optiques. On connait ensuite d'après le document EP-A-0 729 885 un dispositif lourd et encombrant ne pouvant convenir au gerbage d'instruments optiques montés à bord de satellites. Enfin, on connait d'après le document US 2005 / 061 920 un système de stockage d'énergie à roue qui ne présente aucune possibilité de gerbage d'instruments montés dans un satellite.

La présente invention a pour objet un dispositif de maintien réutilisable et sécurisé d'au moins un objet fragile contre une surface fonctionnelle solidement fixée à la structure du satellite pendant au moins au moins une phase opérationnelle relative à ce satellite, facilitant l'accessibilité aux objets ainsi maintenus et des interventions sur ces objets, tout en évitant l'endommagement de ces objets sous l'effet d'accélérations brutales, aussi bien pendant cette (ces) phase(s) opérationnelle(s) que lors de la mise en maintien ou lors de la libération du maintien.

Le dispositif conforme à l'invention defini par la revendication 1 comporte une structure rigide qui enserre partiellement cet objet et qui supporte au moins un mors fixe et un mors mobile faisant sensiblement face au mors fixe, l'objet étant bloqué entre le mors fixe et le mors mobile pendant toute la durée du maintien sécurisé.

Selon une autre caractéristique de l'invention, pour les objets comportant au moins un élément ayant au moins un degré de liberté hors maintien et sensible aux accélérations, le placage contre le mors fixe est obtenu par l'écrasement d'au moins un élément élastique disposé entre ledit élément et une partie fixe de la structure rigide. Cet élément élastique peut être mécanique, magnétique, hydraulique ou pneumatique.

La présente invention sera mieux comprise à la lecture de la description détaillée d'un mode de réalisation, pris à titre d'exemple non limitatif et illustré par le dessin annexé, sur lequel :
- les figures 1 et 2 sont des vues de côté simplifiées d'un dispositif , respectivement à l'état en maintien et hors maintien d'une partie mobile fragile, et
- les figures 3 et 4 sont des vues en coupe d'un exemple d'application du dispositif conforme à la présente invention, respectivement à l'état non gerbé et à l'état gerbé d'un actionneur gyroscopique destiné à un satellite.

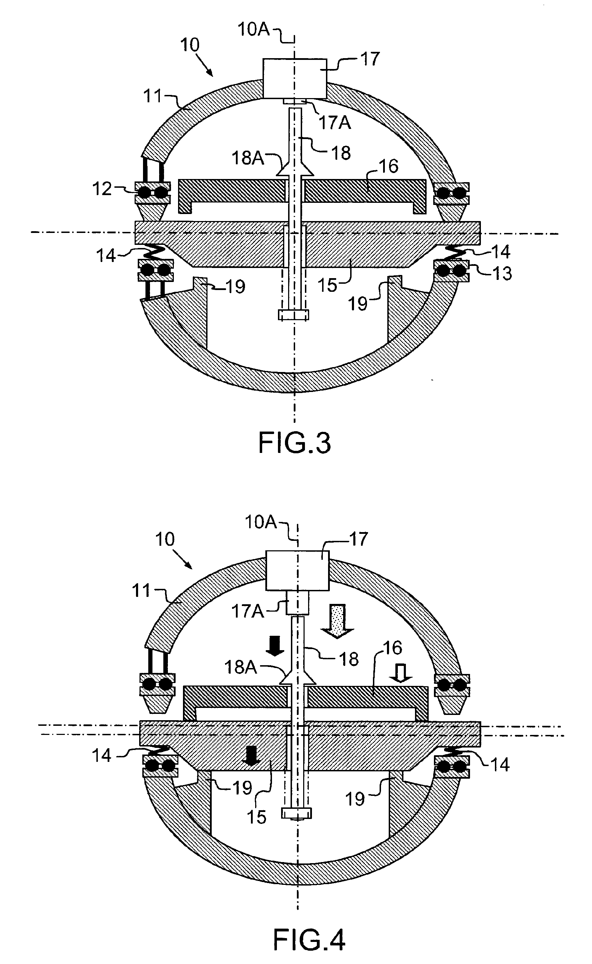

L'invention est décrite ci-dessous en référence à un actionneur gyroscopique (détaillé en figures 3 et 4), mais il est bien entendu que l'invention n'est pas limitée à cette application, et qu'elle peut être mise en oeuvre pour protéger toutes sortes de matériels comportant chacun au moins une partie fragile des effets d'accélérations (contraintes mécaniques et mécano-thermiques) brusques et fortes pendant au moins une phase de leur vie, que ce soit à bord de satellites ou d'autres types de véhicules spatiaux, ou bien des matériels disposés sur des supports quelconques, ces parties fragiles étant du type à au moins un élément normalement mobile à au moins un degré de liberté, ces éléments, ou leurs liaisons avec les matériels qui les comportent, devant être protégés pendant au moins une phase de leur vie.

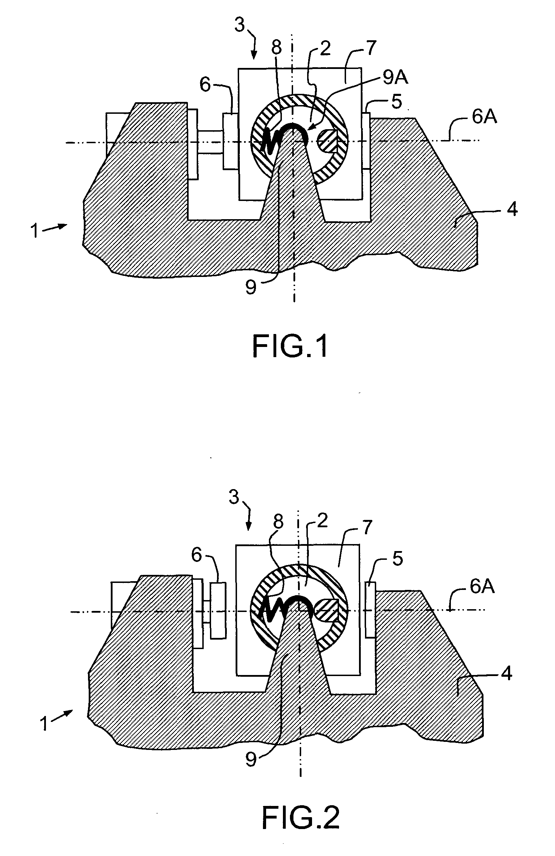

On a schématiquement représenté en figures 1 et 2 un dispositif 1 de maintien sécurisé des parties fragiles 2 et 7, d'un objet 3, mobile en rotation. La fragilité de la partie 2 réside plus particulièrement dans ses axes de rotation et les paliers permettant cette rotation, tandis que la fragilité de la partie 7 réside plus particulièrement en la charge utile elle même. Ce dispositif 1 comporte essentiellement un bâti rigide 4 ayant une forme générale de « U » et muni d'un mors fixe (ou butée) 5 et d'un mors mobile 6, à la manière d'un étau. Bien entendu, dans le cas où l'objet 3 aurait une forme extérieure complexe au lieu d'avoir une face plane telle que représentée sur le dessin, le mors fixe aurait une surface d'appui de forme correspondante. L'axe 6A, est l'axe de déplacement du mors mobile. Bien entendu, la forme du bâti et ses dimensions sont adaptées à l'objet 3.

Pour la mise en oeuvre de ce dispositif 1, on peut soit fixer le bâti 4 à une structure rigide (non représentée), comme c'est le cas pour le bâti représenté en figures 1 et 2, soit employer un automatisme (non représenté) déplaçant le bâti 4 et/ou l'objet 3 l'un vers l'autre afin qu'ils occupent les positions représentées sur ces figures lorsqu'il y a lieu d'assurer le maintien sécurisé de la partie fragile.

L'objet 3 comporte essentiellement un corps 7 comportant un évidement circulaire supportant le composant de guidage fragile 2. De façon générale, cette partie 2 permet la mobilité de l'objet 3 en rotation et/ou en translation après libération du maintien sécurisé. Dans le présent exemple, la partie mobile 2 est un rotor tournant autour d'un axe confondu avec l'axe 6A.

En fonctionnement normal de l'objet 3, la partie 2 occupe, par rapport au corps 7, la position représentée en figure 2, c'est-à-dire qu'elle est centrée par rapport à l'évidement circulaire du corps 7. En outre, cette partie 2 est maintenue dans cette position centrée par un dispositif élastique ou flexible 8, solidaire du guidage 2 d'une part et d'autre part, du bâti 4 par l'intermédiaire du bras 9. Ce dispositif élastique peut aussi bien être un dispositif mécanique (ressort, bloc de matériau élastique tel qu'un élastomère, dispositif hydraulique ou pneumatique,...) qu'un dispositif non mécanique (à répulsion magnétique ou électromagnétique,..). Le dispositif 8, en position opérationnelle, applique une charge suffisante pour « contrer » les efforts environnementaux (accélérations, couples orbitaux...) auxquels peut être soumis l'objet 3 une fois libéré. On obtient ainsi une forte raideur de la liaison tant qu'il n'y a pas application d'une charge supérieure à la précontrainte du dispositif 8.

La puissance du mors mobile 5 est, bien entendu, au moins suffisante pour pouvoir comprimer le dispositif 8 et pour le maintenir comprimé en résistant aux accélérations auxquelles peut être soumis l'objet 3. Le but de ce dispositif élastique est de permettre, d'une part, de permettre le fonctionnement normal des parties mobiles fragiles, et d'autre part de coupler plus ou moins rigidement les liaisons fragiles aux parties fixes pour leur éviter tout mouvement risquant de les endommager. Bien entendu, dans la variante mentionnée ci-dessus, à deux mors mobiles, cet élément 8 n'a pas lieu d'exister.

Afin de protéger cette partie 2 et la partie 7 (charge utile fragile à maintenir, comportant des instruments optiques, la roue porte-aimants,...), l'invention prévoit, lors de la mise en maintien sécurisé, de dé-solidariser la partie 2 d'une butée 9A formée sur le bras 9 qui est lié au bâti 4. Cette butée 9A n'est pas représentée en détail sur les figures 1 et 2, mais un exemple possible en est illustré sur les figures 3 et 4.

Dans le cas représenté, on dispose un seul objet entre les mors 5 et 6, mais il est bien entendu que l'on pourrait en disposer plusieurs côte-à-côte s'ils sont similaires et s'ils peuvent être ainsi disposés, et ce, en prévoyant un nombre correspondant de butées telles que la butée 9A.

Lorsque l'on commande (par télécommande, par minuterie ou à l'aide d'un automatisme de détection d'accélérations, par exemple) la mise en maintien sécurisé de la partie 2, cette commande fait avancer le mors mobile 6 (par exemple un piston d'actuateur linéaire) en direction du mors fixe 5, et lorsque ce mors mobile avance, il arrive au contact de l'objet 3, puis il pousse cet objet vers le mors fixe. Au cours de ce mouvement, la partie 2 n'est plus en contact avec la butée 9A du bras 9, le dispositif élastique 8 est comprimé jusqu'à ce que l'objet 3 entre en contact avec la butée mécanique 5.

Le processus de commande de fin du maintien sécurisé (processus de libération) se déroule en sens inverse : le retrait du mors mobile 6 libère progressivement le dispositif 8, la partie 2 reprend alors sa position normale par rapport au bras 9 (elle revient au contact de la butée 9A) et ce corps 7 est dégagé de tout contact avec les mors 5 puis 6.

On a représenté en figures 3 et 4, à titre d'exemple non limitatif, la mise en application de l'invention à un actionneur gyroscopique 10 équipé d'une roue à palier magnétique. Dans cet exemple, lors du lancement du satellite comportant cet actionneur gyroscopique, il faut gerber simultanément deux sous ensembles : le rotor de la roue et les sous-ensembles de roue sur le bâti. Le but de ce gerbage est de préserver l'intégrité des pièces équipant chaque sous-ensemble, typiquement le rotor de la roue équipé d'aimants très fragiles et sensibles aux chocs ainsi que les composants de guidage, de motorisation et d'asservissement (non représentés).

L'actionneur gyroscopique 10 est d'un type à double cardan à paliers à toupie à paliers magnétiques (rotor et stator), cette toupie étant entrainée dans son ensemble en rotation par un moteur (non représenté), solidaire de la virole 11, selon un axe orthogonal à l'axe de rotation de son rotor. Dans le présent exemple, le guidage de la roue de cet actionneur est à paliers magnétiques, mais le guidage de l'axe orthogonal à la roue (axe de l'actionneur) est à roulements à billes. Cet actionneur gyroscopique étant bien connu en soi, il ne sera décrit que brièvement ici. Il comporte une virole externe 11 de forme générale annulaire supportant des paliers annulaires à roulements 12, 13 diamétralement opposés. Les paliers 12, 13 portent des éléments élastiques, qui sont ici des ressorts 14, solidaires de l'arbre du stator 15 et plaquant ce dernier contre la face opposée de ces mêmes paliers dont le plan est orthogonal à l'axe 10A de la toupie. Les ressorts 14 supportent un stator 15 ayant sensiblement la forme d'un plateau circulaire. En l'état non gerbé, les ressorts 14 appliquent le stator 15 contre les paliers 12 et 13. La toupie comporte en outre un rotor 16, ayant sensiblement la forme d'un plateau circulaire, équipé d'aimants fragiles et sensibles aux chocs et mobile en rotation autour de l'axe 10A. Le rotor 16 est, en fonctionnement normal, à une faible distance du stator 15 (quelques millimètres).

Le dispositif de gerbage conforme à l'invention comporte essentiellement un actuateur linéaire 17 et un élément de transmission 18 en forme de cintre, transmettant l'effort axial de l'actuateur au rotor 16, qui vient buter contre des butées fixes latérales 19 de la façon décrite ci-dessous. L'actuateur 17 est fixé sur la virole 10 de façon que son poussoir 17A se déplace selon l'axe 10A. La course de ce poussoir est relativement faible : quelques millimètres, et il développe une force de poussée d'environ 15 à 20 kN. L'élément 18 est mobile en translation et guidé coaxialement à l'axe 10A par le stator 15, et traverse sans contact une ouverture centrale 16A du rotor. Cet élément 18 comporte une butée mécanique en forme d'épaulement 18A formé sur sa partie située entre le rotor 16 et l'actuateur 17, de façon à être proche du stator en position non gerbée, sans entrer en contact avec lui.

On a représenté en figure 4 l'actionneur gyroscopique 10 en position gerbée. Pour atteindre cette position, on télécommande l'actuateur 17 dont le poussoir 17A pousse l'élément 18 en direction du rotor 16, ce qui a pour effet d'appliquer l'épaulement 18A sur le rotor 16 qui vient au contact du stator 15, puis, le rotor 16 repousse le stator en comprimant les ressorts 14 jusqu'à ce que la face du stator opposée au rotor vienne au contact de butées fixes 19 formées sur la virole 11. Bien entendu, ces butées 19 sont disposées de façon que lorsque le stator 15 vient à leur contact, les ressorts 14 soient normalement comprimés (sans être exagérément écrasés) et que la course du poussoir 17A juste suffisante pour obtenir cette compression normale. Il est également bien entendu que l'actuateur 17 et sa commande sont prévus pour maintenir le gerbage aussi longtemps que nécessaire, sans alimentation en courant continue. On obtient ainsi l'immobilisation simultanée du rotor de la roue sur le stator et du stator sur la virole externe. Lors du dégerbage, un signal de télécommande approprié envoyé à l'actuateur 17 commande le retrait du poussoir 17A, ce qui a pour conséquence le retour de la tige 18, du stator 15 et du rotor 16 à leurs positions originales (telles que représentées en figure 3).

Ce dispositif ne nécessite aucune intervention humaine directe pour le gerbage ou le dé-gerbage de l'ensemble, l'actuateur 17 pouvant être télécommandé de toute façon appropriée (la seule contrainte est de positionner le sous-ensemble rotor-stator dans l'axe de poussée). Au lancement du satellite, les roulements de l'actionneur gyroscopique ne sont que peu contraints grâce à l'action du gerbage qui applique l'ensemble stator et rotor contre la virole externe. Ceci permet de limiter les précontraintes sur les roulements et donc les couples résistant associés en mode opérationnel.

Le dispositif de l'invention présente les avantages suivants : il ne comporte qu'un mécanisme autonome ne nécessitant aucune intervention extérieure, il permet de gerber plusieurs objets simultanément, le gerbage est progressif et sans chocs, et on a la possibilité de re-gerber un objet après utilisation (test ou vol), ce qui présente un gain de temps et de dépenses lors de son industrialisation.

## Revendications

1. Dispositif de maintien réutilisable sécurisé d'au moins un objet fragile sensible aux chocs et accélérations pendant au moins une phase opérationnelle d'utilisation de cet objet (15, 16),
comportant une structure rigide (11) qui enserre partiellement cet objet (15, 16) et qui supporte au moins un mors fixe (19) et un mors mobile (18, 17A) ;
ledit objet comprenant un stator (15) et un rotor (16) ; **caractérisé en ce que** ledit objet (15, 16) est en outre mobile en rotation par rapport à la structure rigide (11); et **en ce que** le blocage de l'objet (15, 16) est obtenu par le mors mobile (18, 17A) qui pousse le rotor (16) au contact du stator (15) ; le stator (15) étant ainsi repoussé en butée contre le mors fixe (19) en comprimant au moins un élément élastique (14), l'objet étant bloqué entre le mors fixe et le mors mobile pendant toute la durée du maintien sécurisé.

2. Dispositif selon la revendication 1, **caractérisé en ce que** l'objet (15, 16) est mobile en rotation par rapport à la structure rigide (11) selon un axe sensiblement orthogonal à l'axe de rotation du rotor (16) par rapport au stator (15).

3. Dispositif selon la revendication 2, **caractérisé en ce que** le rotor (15) et le stator (16) sont mobiles en rotation au moyen de paliers magnétiques.

4. Dispositif selon l'une des revendications précédentes, **caractérisé en ce que** l'élément élastique est un élément mécanique.

5. Dispositif selon l'une des revendications précédentes, **caractérisé en ce que** l'élément élastique est un élément à lame, un ressort ou un dispositif en matériau élastomère.

6. Dispositif selon l'une des revendications précédentes, **caractérisé en ce que** l'élément élastique est un élément hydraulique ou pneumatique.

7. Dispositif selon l'une des revendications précédentes, **caractérisé en ce que** l'élément élastique est un élément à répulsion magnétique ou électromagnétique.

8. Dispositif selon l'une des revendications précédentes, **caractérisé en ce que**, les éléments élastiques (14) étant en position opérationnelle, on leur applique une charge suffisante pour « contrer » les efforts environnementaux auxquels peut être soumis l'objet (3) une fois libéré.

9. Dispositif selon l'une des revendications précédentes, **caractérisé en ce que** ledit objet est un actionneur gyroscopique du type à rotor (16) à palier magnétique et que le mors mobile comporte un poussoir (17A) d'actuateur et un élément de transmission (18) sans contact, en mode opérationnel, avec le rotor et comportant une butée mécanique (18A) s'appliquant sur le rotor pendant toute la durée du maintien sécurisé et appliquant alors ce dernier sur le stator qui est lui-même appliqué sur des butées (19) formées sur la virole.

10. Engin spatial **caractérisé en ce qu'**il comporte un dispositif selon l'une des revendications précédentes.

## Patentansprüche

1. Sichere wiederverwendbare Vorrichtung zum Halten von wenigstens einem zerbrechlichen Objekt, das für Schocks und Beschleunigungen empfindlich ist, wenigstens während einer betriebliche Benutzungsphase dieses Objekts (15, 16),
umfassend eine starre Struktur (11), die das Objekt (15, 16) teilweise umgibt und wenigstens eine feste Spannbacke (19) und eine bewegliche Spannbacke (18, 17A) trägt,
wobei das Objekt einen Stator (15) und einen Rotor (16) umfasst, **dadurch gekennzeichnet, dass** das Objekt (15, 16) ferner rotationsbeweglich relativ zu der starren Struktur (11) ist, und dadurch, dass die Arretierung des Objekts (15, 16) dadurch erzielt wird, dass die bewegliche Backe (18, 17A) den Rotor (16) in Kontakt mit dem Stator (15) schiebt, wobei der Stator (15) somit gegen die feste Spannbacke (19) zurückgedrückt wird, indem wenigstens ein elastisches Element (14) komprimiert wird, wobei das Objekt für die gesamte Dauer des sicheren Haltens zwischen der festen Spannbacke und der beweglichen Spannbacke arretiert wird.

2. Vorrichtung nach Anspruch 1, **dadurch gekennzeichnet, dass** das Objekt (15, 16) relativ zur starren Struktur (11) um eine Achse rotationsbeweglich ist, die im Wesentlichen orthogonal zur Rotationsachse des Rotors (16) relativ zum Stator (15) ist.

3. Vorrichtung nach Anspruch 2, **dadurch gekennzeichnet, dass** der Rotor (15) und der Stator (16) mittels magnetischer Lager rotieren.

4. Vorrichtung nach einem der vorherigen Ansprüche, **dadurch gekennzeichnet, dass** das elastische Element ein mechanisches Element ist.

5. Vorrichtung nach einem der vorherigen Ansprüche, **dadurch gekennzeichnet, dass** das elastische Element ein Blattelement, eine Feder oder eine Vorrichtung aus einem elastomeren Material ist.

6. Vorrichtung nach einem der vorherigen Ansprüche, **dadurch gekennzeichnet, dass** das elastische Element ein hydraulisches oder pneumatisches Element ist.

7. Vorrichtung nach einem der vorherigen Ansprüche, **dadurch gekennzeichnet, dass** das elastische Element ein Element mit magnetischer oder elektromagnetischer Abstoßung ist.

8. Vorrichtung nach einem der vorherigen Ansprüche, **dadurch gekennzeichnet, dass** die elastischen Elemente (14), wenn sie in Betriebsposition sind, mit einer ausreichenden Last beaufschlagt werden, um den Umgebungskräften "entgegenzuwirken", denen das Objekt (3) nach dem Freigeben ausgesetzt sein kann.

9. Vorrichtung nach einem der vorherigen Ansprüche, **dadurch gekennzeichnet, dass** das Objekt ein gyroskopischer Aktuator (16) des Rotortyps mit einem magnetischen Lager ist, und dadurch, dass die bewegliche Spannbacke einen Aktuatorschieber (17A) und ein Übertragungselement (18) umfasst, das im Betriebsmodus keinen Kontakt mit dem Rotor hat, und einen mechanischen Anschlag (18A) aufweist, der während des sicheren Haltens auf den Rotor wirkt und dann diesen gegen den Stator drückt, der wiederum gegen die an der Zwinge ausgebildeten Anschläge (19) gedrückt wird.

10. Raumflugkörper, **dadurch gekennzeichnet, dass** er eine Vorrichtung nach einem der vorherigen Ansprüche umfasst.

## Claims

1. A secure, reusable device for supporting at least one fragile object that is sensitive to shocks and accelerations, for at least one operational phase of use of said object (15, 16),
said device comprising a rigid structure (11) that partially engages said object (15, 16) and that supports at least one fixed jaw (19) and one mobile jaw (18, 17A),
said object comprising a stator (15) and a rotor (16), **characterised in that** said object (15, 16) is also rotatable relative to said rigid structure (11), and **in that** the blocking of said object (15, 16) is achieved due to the fact that said mobile jaw (18, 17A) pushes said rotor (16) in contact with said stator (15), said stator (15) thus being forced back against said fixed jaw (19) by compressing at least one elastic element (14), said object being blocked between said fixed jaw and said mobile jaw for the whole duration of secure holding.

2. The device according to claim 1, **characterised in that** said object (15, 16) is mobile by rotation relative to said rigid structure (11) about an axis that is substantially orthogonal to the axis of rotation of said rotor (16) relative to said stator (15).

3. The device according to claim 2, **characterised in that** said rotor (15) and said stator (16) are mobile by rotation by means of magnetic bearings.

4. The device according to any one of the preceding claims, **characterised in that** said elastic element is a mechanical element.

5. The device according to any one of the preceding claims, **characterised in that** said elastic element is a leaf element, a spring or a device made from an elastomer material.

6. The device according to any one of the preceding claims, **characterised in that** said elastic element is a hydraulic or pneumatic element.

7. The device according to any one of the preceding claims, **characterised in that** said elastic element is an element with magnetic or electromagnetic repulsion.

8. The device according to any one of the preceding claims, **characterised in that**, with said elastic elements (14) in an operational position, a sufficient load is applied thereto in order to "counter" the environmental forces that said object (3) can undergo once released.

9. The device according to any one of the preceding claims, **characterised in that** said object is a gyroscopic actuator (16) of the rotor type with a magnetic bearing, and **in that** said mobile jaw comprises an actuator pusher (17A) and a transmission element (18) that in operational mode is not in contact with the rotor and comprises a mechanical stop (18A) that presses against the rotor for the duration of secure holding and then presses said rotor against said stator, which itself is pressed against the stops (19) formed on the shell.

10. A spacecraft, **characterised in that** it comprises a device according to any one of the preceding claims.
